# EUROPÄISCHE PATENTSCHRIFT

(11) **EP 0 987 475 B1**
(45) Veröffentlichungstag und Bekanntmachung des Hinweises auf die Patenterteilung: **14.12.2005**
(21) Anmeldenummer: 99118464.9
(22) Anmeldetag: 17.09.1999
(51) Int. Cl.: F16K 1/30

(54) **Restdruckventil**
Residual pressure valve
Soupape de pression résiduelle

(30) Priorität: 18.09.1998 DE 29816721 U
(43) Veröffentlichungstag der Anmeldung: 22.03.2000
(73) Patentinhaber: Alligator Ventilfabrik GmbH, D-89526 Giengen (DE)
(72) Erfinder: Palaoro, Renato, 89518 Heidenheim (DE)
(74) Vertreter: Hiebsch, Gerhard F.

(56) Entgegenhaltungen:
- EP-A- 0 708 281
- DE-A- 4 214 544
- DE-U- 7 611 936
- GB-A- 979 441
- US-A- 4 993 451
- US-A- 5 067 520

## Beschreibung

Die Erfindung betrifft ein Restdruckventil für einen Luftstrom od.dgl. Strömungsmedium, dessen in einem Ventilgehäuse angeordneter Strömungsdurchgang in Abhängigkeit von dem Druck des Luftstromes mittels eines wenigstens teilweise bewegbaren Dichtelementes unterbrechbar ausgestaltet ist, nach dem Oberbegriff des Patentanspruches 1.

Durch die EP 0 708 281 A1 ist ein solches Rückschlagventil bekannt geworden mit einem radialen Luftausgang für eine axial verlaufende Luftkammer, in der im Rahmen eines mit Drehgriff versehenen axialen Stellarmes ein federbelastetes Druckelement mit bodenwärtigem Dichtungsring axial verschoben werden kann. Der Dichtungsring sitzt in Schließstellung auf einer Ringschulter eines -- dann vom Dichtungsring umgebenen -- axialen Luftkanals auf.

Die Schrift zum DE-GM 76 11 936 offenbart ein Rückschlagventil mit in einem zylindrischen -- radial angesetzte Rohranschlüsse aufweisenden -- Innenraum angeordnetem Ventilstössel; dieser wird von einer einends angreifenden Schraubenfeder gegen eine sich in deren Druckrichtung verjüngende Anschlagfläche gedrückt und verschließt dabei einen Anschlussstutzen für einen Druckbehälter. Das Einströmen eines Druckmediums aus dem Druckbehälter in jenen Innenraum erfolgt nur, wenn im Druckbehälter ein vorbestimmter Überdruck herrscht. Rückschlagventile dieser Art sperren den Durchfluss in einer Strömungsrichtung.

Demgegenüber bleibt bei sog. Restdruckventilen der Durchfluss in beide Richtungen offen, solange ein definierter Restdruck im Gesamtsystem nicht unterschritten wird. So ist ein Restdruckventil mit Axialbohrung bekannt, die einends in einem Schraubhals des Ventils sowie andernends an einer Anschlussöffnung für eine Luftleitung endet. Diese Axialbohrung ist etwa in Ventilmitte unterbrochen, und ihre beiden so entstehenden Leitungsabschnitte sind durch Querbohrungen mit einem das Ventilgehäuse umfangenden Ringraum verbunden. In diesem ist ein die vier Mündungen der beiden Querbohrungen überspannender rohrstutzenartiger Elastomerschlauch untergebracht, welcher sich bei hohem Druck von jenen Mündungen abhebt und dann einen aus diesen Querbohrungen sowie den an sie anschließenden beiden Abschnitten der Axialbohrung gebildeten Strömungsraum für Druckluft begrenzt; bei einem definiert niederen Druck legt sich der Elastomerschlauch als Dichtmanschette an das Ventilgehäuse an und trennt die Querbohrungen strömungstechnisch voneinander. In der Praxis hat sich gezeigt, dass eine solche Dichtmanschette nach einer gewissen Betriebszeit durch Eigenfederung nicht mehr in ihre ursprüngliche Lage zurückkehrt; die Dichtfunktion ist also nicht zu gewährleisten.

In Kenntnis dieses Standes der Technik hat sich der Erfinder das Ziel gesetzt, ein Restdruckventil der eingangs erwähnten Art zu verbessern, insbesondere seinen Aufbau zu vereinfachen sowie die Betriebssicherheit zu erhöhen.

Zur Lösung dieser Aufgabe führt die Lehre des unabhängigen Anspruches; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmalen.

Erfindungsgemäß weist der Strömungsweg zwei durch einen Querboden getrennte koaxiale Durchgangsbohrungen und von diesen ausgehende radiale Durchgänge auf, welch letztere durch Seitenbohrungen verbunden sind, die bevorzugt etwa achsparallel verlaufen. Das Dichtelement ist hier dem Übergang der von ihm und dem Kraftspeicher umgebenen, in Strömungsrichtung ersten axialen Durchgangsbohrung zu den Seitenbohrungen außerhalb des Strömungsweges zugeordnet. Dabei soll die Ringkante am Übergang der radialen Durchgänge der einen Durchgangsbohrung zu den Seitenbohrungen vorgesehen werden.

Als günstig hat es sich zudem erwiesen, diesen -- bevorzugt als etwa zylindrische Feder ausgebildeten -- Kraftspeicher außerhalb des Strömungsweges vorzusehen, insbesondere in einer Ringnut eines Gehäuseteils, anzuordnen. Dieser Kraftspeicher soll vorteilhafterweise bei Unterschreitung eines vorgebbaren Druckes -- beispielsweise 4 bar -- unter Verlagerung und/oder Verformung des Dichtelements entspannbar sein und den Strömungsweg verschließen.

Die Längsachse des Ventils umgeben ringförmig ausgebildete Dichtelemente, die bei abnehmendem Luftdruck gegen eine Ringkante des Ventilgehäuses geführt zu werden vermögen. Die Verformung des Dichtelements erfolgt hier also nicht in dem an sich belastenden Zustand hohen Druckes.

In einer erfinderischen Ausgestaltung ist das Dichtelement ein an seinen beiden Kanten eingespannter Dichtring, der bei abnehmendem Luftdruck zunehmend durch den Kraftspeicher querschnittlich verformt und in der so veränderten Querschnittsgestalt -- mit einem ringförmigen Formgrat oder - wulst -- gegen die Ringkante geführt wird.

Auch liegt ein Dichtelement oder ein Dichtring im Rahmen der Erfindung, dem eine den -- auch hier eine etwa zylindrische Feder bildenden -- Kraftspeicher teilweise umgebende Büchse aus flexiblem Werkstoff zugeordnet ist; in Abdichtlage drückt die Büchse mit einem in der Radialebene liegenden ringförmigen Abschnitt gegen die Ringkante.

Besonders wirksam ist die Abdichtung, wenn beide Dichtelemente zusammenwirken, d. h. der Dichtring von dem ringförmigen Abschnitt der dem Kraftspeicher aufliegenden Büchse untergriffen und von ihm verformt wird. Jedoch können auch zwei konzentrisch eingespannte Ringe vorgesehen werden, deren Zwischenraum vom benachbarten Abschnitt der Büchse durchfahren zu werden vermag, bis dieser sich der Ringkante unmittelbar anschmiegt.

Die ringartige Büchse soll bevorzugt einen etwa L-förmigen Querschnitt aus jenem ringförmigen Abschnitt sowie einer etwa achsparallel anschließenden Ringwand aufweisen; letztere ist dann der Außenwand der Ringnut zugeordnet.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1:: einen Teillängsschnitt durch den oberen Teil eines druckluftbeaufschlagten sowie ein Restdruckventil enthaltenden Federbeins der Automobilindustrie;
- Fig. 2, 3:: zwei Ausführungsformen des Restdruckventils in gegenüber Fig. 1 vergrößerter und teilweise geschnittener Seitenansicht.

In einem nur mit seinem oberen Bereich wiedergegebenen druckluftbeaufschlagten Federbein 10 für ein Kraftfahrzeug ist an einer Firstöffnung 12 bei 14 eine trichterartige Halterung 15 für ein Restdruckhalteventil 20 festgelegt; dieses ruht mit einem Schraubhals 22 in einer schachtartigen Öffnung 16 der Halterung 15. Mit diesem Restdruckhalteventil 20 soll in einem Kopfraum 18 des Federbeins 10 ein Restdruck gewährleistet werden; ist dessen vorgegebenes Maß von beispielsweise 4 bar erreicht, schließt das Restdruckhalteventil 20.

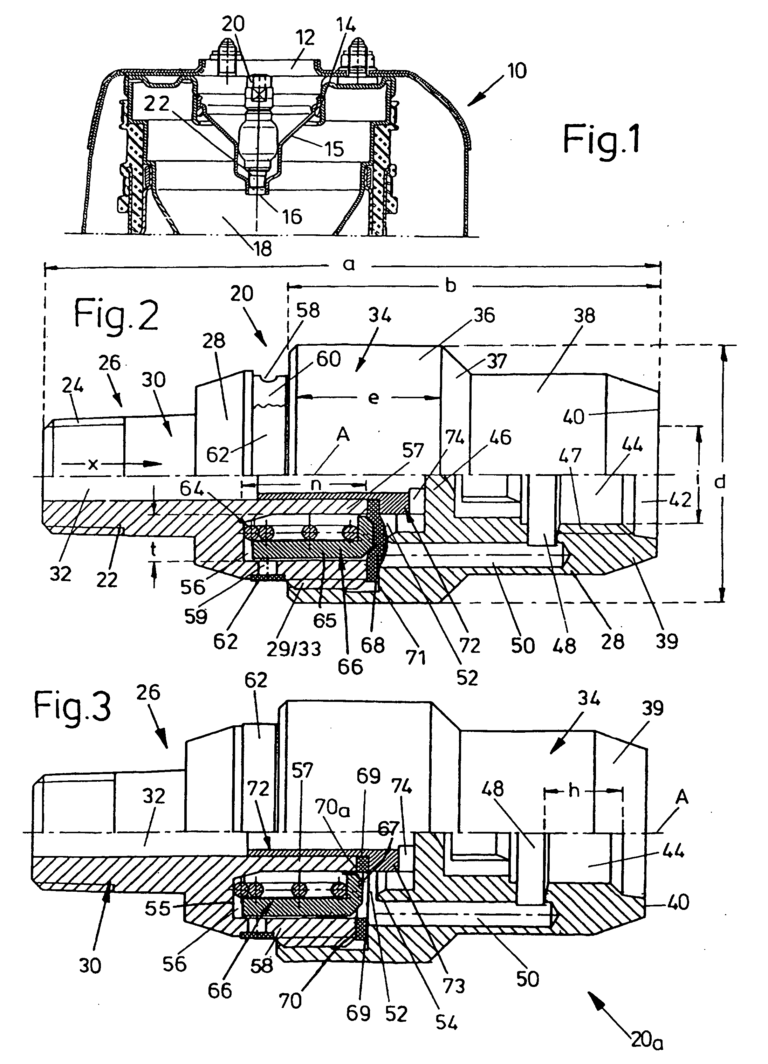

Gemäß Fig. 2 ist der sich endwärts geringfügig kegelförmig verjüngende -- als Dichtschraube M 8 x 1 mit einem Außengewinde 24 ausgeführte -- Schraubhals 22 Teil eines aus einem CuZn-Werkstoff geformten Ventilgehäuses 26 der Länge a von hier etwa 41 mm. Dieses weist ein sich am Ende des Schraubhalses 22 gestuft zu einem ringförmigen Kupplungskörper 28 mit Außengewinde 29 erweiterndes Gehäuseunterteil 30 mit axialer Durchgangsbohrung 32 auf sowie ein auf dieses mittels eines Innengewindes 33 aufgeschraubtes Gehäuseoberteil 34 der Länge b von etwa 25 mm.

Das Innengewinde 33 des Gehäuseoberteils 34 verläuft in einem auf jenen Kupplungskörper 28 aufdrehbaren Büchsenring 36, der hier auf eine Länge e von etwa 9,5 mm gleichbleibenden, hier 18 mm betragenden Außendurchmessers d ist. An diesen -- sich mit einem Zwischenbereich 37 verjüngenden -Büchsenring 36 schließt ein zylindrischer Kopfabschnitt 38 des Ventilgehäuses 26 an mit einem sich zu einer Mündungskante 40 verjüngenden Endbereich 39. Diese Mündungskante 40 umgibt eine endwärtige Auslaßöffnung 42 einer in die Ventillängsachse A fallenden axialen Sackbohrung 44 des Gehäuseoberteils 34.

Der Durchmesser i der an einem Querboden 46 endenden Sackbohrung 44 misst hier an einem -- in Anschluss an eine die Mündung der Auslassöffnung 42 bestimmende Erweiterung verlaufenden -- Innengewinde 47 etwa 7 mm und enthält am Ende des Innengewindes 47 der axialen Länge h von etwa 5 mm eine ringförmige Radialnut 48. Diese erfasst zwei achsparallele und zur Mündungskante 40 hin geschlossene Seitenbohrungen 50 des Gehäuseoberteils 34, die in einen zylindrischen Aufnahmeraum 52 für den Kupplungskörper 28 des Gehäuseunterteils 30 -- an einer vor allem in Fig. 3 verdeutlichten Ringkante 54 des Gehäuseoberteils 34 -- münden.

Der Ringkante 54 steht eine in den Kupplungskörper 28 des Gehäuseunterteils 30 eingeformten Ringnut 56 achsparalleler Tiefe n von etwa 8 mm und einer radialen Weite t von etwas mehr als 3 mm gegenüber, die von einer Innenwand 57 und einer Außenwand 58 begrenzt ist. Diese weist nahe dem Nutentiefsten 55 zumindest zwei diametrale Radialbohrungen 59 auf, die in eine äußere flache Ringeinformung 60 des Kupplungskörpers 28 münden und von einem darin sitzenden Dichtring 62 aus einem Siliconwerkstoff überspannt sind.

In der Ringnut 56 lagert eine ihre rohrartige Innenwand 57 umfangende Schraubenfeder 64, die an ihrer Außenseite und zur Ringkante 54 des Gehäuseoberteils 34 hin von einer Kunststoffbüchse 66 L-förmigen Querschnitts als Federführung überspannt ist; diese Kunststoffbüchse 66 deckt mit dem eine Ringwand 65 bildenden längeren Querschnittsschenkel die Außenseite der Schraubenfeder 64 sowie erkennbar auch die erwähnten Radialbohrungen 58 an der Innenfläche des Oberteils 34 ab.

Die Ringnut 56 mit ihrer Schraubenfeder 64 und der Kunststoffbüchse 66 wird von einem Dichtring 68 übergriffen, der nach außen hin von einander gegenüberstehenden Radialkanten 70 bzw. 71 des Gehäuseunterteils 30 bzw. des Gehäuseoberteils 34 klemmend gehalten ist; achswärts liegt der Dichtring 68 einer inneren Radialkante 70ₐ des Gehäuseunterteils 30 auf, gegen die er durch einen Ringkragen 73 einer sich in der Durchgangsbohrung 32 an die Innenwand 57 schmiegenden metallischen Dichthülse 72 -ebenfalls L-förmigen Querschnitts -- gedrückt wird. Letztere bietet zum Querboden 46 des Gehäuseoberteils 34 hin zwei einander diametral gegenüberliegende Radialdurchgänge 74 an.

Der jener Schraubenfeder 64 bzw. ihrer Kunststoffbüchse 66 aufliegende Dichtring 68 wird bei einem vorab bestimmbaren Druck von beispielsweise 12 bar in Abstand zur Ringkante 54 des Gehäuseoberteils 34 gehalten, so dass die -- etwa im Kopfraum 18 des Federbeins 10 befindliche -- Luft in Pfeilrichtung x durch die Durchgangsbohrung 32, die Radialdurchgänge 74 sowie um die Ringkante 54 herum in die Seitenbohrungen 50 gelangen kann und aus diesen in die Sackbohrung 44; dieser wird die Luft über eine nicht dargestellte, an die Auslassöffnung 42 anschließende Leitung entnommen.

Nimmt der Druck beispielsweise bis auf 4 bar ab, entspannt sich die Schraubenfeder 64 und drückt den Dichtring 68 der Ringkante 54 zu, bis sich diese in den Werkstoff des Dichtringes 68 eindrückt, dessen Querschnitt unter Bildung eines etwa in Querschnittsmitte verlaufenden Wulstes oder Grates verformt, der sich dabei an jene Ringkante 54 zunehmend annähert und den Luftdurchgang verschließt.

Im Ausführungsbeispiel eines anderen Restdruckhalteventils 20ₐ der Fig. 3 sind statt des beschriebenen breiten Dichtringes 68 zwei schmale Dichtringe 69 zwischen den äußeren Radialkanten 70, 71 von Außenwand 58 und Büchsenring 36 bzw. der inneren Radialkante 70ₐ der Innenwand 57 und dem dieser gegenüberstehenden Ringkragen 73 der Dichthülse 72 klemmend gehalten; die Ringnut 56 ist zum Gehäuseoberteil 34 hin geöffnet und gibt einen Weg für einen Teil der Kunststoffbüchse 66 frei. Letztere ist an ihrem radialen Kopfring 67 gegen die Innenwand 57 der Ringnut 56 und die benachbarte Außenwand 58 abgedichtet. Die Kunststoffbüchse 66 kann sich nunmehr bei Erreichen des entsprechenden Restdruckes der Ringkante 54 in zu Fig. 2 erörterter Weise anschmiegen.

## Patentansprüche

1. Restdruckventil für einen Luftstrom od.dgl. Strömungsmedium, dessen in einem Ventilgehäuse (26) angeordneter Strömungsdurchgang in Abhängigkeit von dem Druck des Luftstromes mittels eines wenigstens teilweise bewegbaren Dichtelementes (67, 68, 69) unterbrechbar ausgestaltet ist sowie in den Strömungsweg (32, 44, 48, 50, 52, 74) des Luftstromes ein etwa in einer Radialebene zur Längsachse (A) des Ventils (20, 20ₐ) angeordnetes Dichtelement (67, 68, 69) durch einen Kraftspeicher (64) einführbar und zur Unterbrechung des Strömungsweges an ein Gegenelement (54) des Ventils (20, 20ₐ) anlegbar ist,
**dadurch gekennzeichnet,**
**dass** der Strömungsweg zwei durch einen Querboden (46) getrennte koaxiale Durchgangsbohrungen (32, 44) und von diesen ausgehende radiale Durchgänge (48, 74) aufweist, welch letztere durch Seitenbohrungen (50) verbunden sind, wobei das Dichtelement (67, 68, 69) dem Übergang der von ihm und dem Kraftspeicher (64) umgebenen, in Strömungsrichtung (x) ersten axialen Durchgangsbohrung (32) zu den Seitenbohrungen (50) außerhalb des Strömungsweges (32, 44, 48, 50, 52, 74) zugeordnet ist.

2. Ventil nach Anspruch 1, **dadurch gekennzeichnet, dass** die Seitenbohrungen (50) etwa achsparallel verlaufen.

3. Ventil nach Anspruch 1 oder 2, **dadurch gekennzeichnet, dass** der als etwa zylindrische Feder ausgebildete Kraftspeicher (64) in einer Ringnut (56) eines die erste Durchgangsbohrung (32) umfangenden Gehäuseteils (30) angeordnet ist.

4. Ventil nach einem der Ansprüche 1 bis 3, **dadurch gekennzeichnet, dass** das Dichtelement ein beidseits eingespannter Dichtring (68) ist, der durch den Kraftspeicher (64) querschnittlich verformbar und in verformter Querschnittsgestalt gegen eine Ringkante (54) als Gegenelement am Ventilgehäuse (26) führbar gelagert ist.

5. Ventil nach Anspruch 4, **dadurch gekennzeichnet, dass** der Dichtring (68) in verformtem Zustand am zugeordneten Kraftspeicher (64) einen Formgrat oder -wulst als Dichtorgan bildet.

6. Ventil nach Anspruch 4 oder 5, **dadurch gekennzeichnet, dass** dem Dichtring (68) eine den Kraftspeicher (64) zumindest teilweise umgebende Büchse (66) aus flexiblem Werkstoff zugeordnet ist, die mit einem in der Radialebene liegenden ringförmigen Abschnitt (67) gegen den Dichtring führbar ist.

7. Ventil nach Anspruch 6, **dadurch gekennzeichnet, dass** die Büchse (66) einen etwa L-förmigen Querschnitt aus dem ringförmigen Abschnitt (67) sowie einer etwa achsparallel anschließenden Ringwand (65) aufweist, welche der Außenwand (58) der Ringnut (56) zugeordnet ist.

8. Ventil nach Anspruch 6 oder 7, **dadurch gekennzeichnet, dass** der Dichtring (68) von dem ringförmigen Abschnitt (67) der dem Kraftspeicher (64) zugeordneten Büchse (66) untergriffen und von ihm verformbar ausgebildet ist.

9. Ventil nach einem der Ansprüche 1 bis 3, **gekennzeichnet durch** ein Dichtelement (69) aus zwei konzentrischen Ringen und eine den Kraftspeicher (64) zumindest teilweise umgebende Büchse (66) aus flexiblem Werkstoff mit einem in der Radialebene liegenden ringförmigen Abschnitt (67), wobei die Büchse zwischen die Ringe einschiebbar gestaltet sowie der ringförmige Abschnitt gegen eine Ringkante (54) als Gegenelement am Ventilgehäuse (26) führbar gelagert ist.

10. Ventil nach Anspruch 9, **dadurch gekennzeichnet, dass** die Ringkante (54) am Übergang der radialen Durchgänge (74) der einen Durchgangsbohrung (32) zu den Seitenbohrungen (50) vorgesehen ist.

11. Ventil nach einem der Ansprüche 5 bis 10, **dadurch gekennzeichnet, dass** in der Außenwand (58) der den Kraftspeicher (64) sowie die Büchse (66) aufnehmenden, zur Ringkante (54) hin offenen Ringnut (56) Radialbohrungen (58) vorgesehen und gegebenenfalls von der Ringwand (65) der Büchse (66) übergriffen sind.

12. Ventil nach einem der Ansprüche 1 bis 11, **dadurch gekennzeichnet, dass** der Kraftspeicher (64) bei Unterschreitung eines vorgebbaren Druckes unter Verlagerung und/oder Verformung des Dichtelements (67, 68, 69) entspannbar ist.

## Claims

1. Residual pressure valve for a stream of air or like flowing medium whose flow passage disposed in a valve housing (26) is designed to be interruptable as a function of the pressure of the stream of air by means of an at least partially movable sealing element (67, 68, 69) and a sealing element (67, 68, 69) arranged approximately in a radial plane relative to the longitudinal axis (A) of the valve (20, 20ₐ) is introducible into the flow path (32, 44, 48, 50, 52, 74) of the stream of air by an energy storage device (64) and positionable against a mating element (54) of the valve (20, 20ₐ) to interrupt the flow path, **characterised in that** the flow path possesses two coaxial through bores (32, 44) separated by a transverse floor (46) and radial passages (48, 74) emanating from said through bores which passages are connected by side bores (50), wherein the sealing element (67, 68, 69) is associated with the junction of the first axial through bore (32) in the direction of flow (x) surrounded by itself and the energy storage device (64) with the side bores (50) outside the flow path (32, 44, 48, 50, 52, 74).

2. Valve according to claim 1, **characterised in that** the side bores (50) run approximately parallel to the axis.

3. Valve according to claim 1 or 2, **characterised in that** the energy storage device (64) constructed in the form of an approximately cylindrical spring is arranged in an annular groove (56) of a housing part (30) enveloping the first through bore (32).

4. Valve according to any of claims 1 to 3, **characterised in that** the sealing element is a sealing ring (68) clamped on both sides whose cross-section is deformable by the energy storage device (64) and in the deformed cross-sectional shape is mounted movably against an annular edge (54) as the mating element on the valve housing (26).

5. Valve according to claim 4, **characterised in that** the sealing ring (68) in the deformed state on the associated energy storage device (64) forms a mould flash or bulge as the sealing element.

6. Valve according to claim 4 or 5, **characterised in that** associated with the sealing ring (68) is a casing (66) composed of flexible material which surrounds the energy storage device (64) at least in part and is movable against the sealing ring by an annular section (67) located in the radial plane.

7. Valve according to claim 6, **characterised in that** the casing (66) has an approximately L-shaped cross-section composed of the annular section (67) and an approximately axially parallel adjoining annular wall (65) which is associated with the outer wall (58) of the annular groove (56) .

8. Valve according to claim 6 or 7, **characterised in that** the sealing ring (68) is engaged from below by the annular section (67) of the casing (66) associated with the energy storage device (64) and is constructed to be deformable by said annular section.

9. Valve according to any of claims 1 to 3, **characterised by** a sealing element (69) composed of two concentric rings and a casing (66) of flexible material surrounding the energy storage device (64) at least in part and having an annular section (67) located in the radial plane, wherein the casing is designed to be insertable between the rings and the annular section is mounted movably against an annular edge (54) as the mating element on the valve housing (26).

10. Valve according to claim 9, **characterised in that** the annular edge (54) is provided at the junction of the radial passages (74) of one through bore (32) with the side bores (50).

11. Valve according to any of claims 5 to 10, **characterised in that** in the outer wall (58) of the angular groove (56) accommodating the energy storage device (64) and the casing (66) and open towards the annular edge (54) radial bores (58) are provided over which if need be the annular wall (65) of the casing (66) engages.

12. Valve according to any of claims 1 to 11, **characterised in that** when the pressure falls below a specifiable value the energy storage device (64) is releasable with displacement and/or deformation of the sealing element (67, 68, 69).

## Revendications

1. Soupape de pression résiduelle pour un écoulement d'air ou d'un fluide similaire dont le passage d'écoulement, disposé dans un boîtier de soupape (26), est agencé en étant susceptible de s'interrompre en fonction de la pression de l'écoulement d'air au moyen d'un élément d'étanchéité (67, 68, 69) mobile au moins partiellement, soupape dans laquelle un élément d'étanchéité (67, 68, 69) disposé sensiblement dans un plan radial à l'axe longitudinal (A) de la soupape (20, 20a) est également susceptible d'être introduit sur le trajet d'écoulement (32, 44, 48, 50, 52, 74) de l'écoulement d'air par un accumulateur d'énergie (64) et est susceptible de venir sur un contre-élément (54) de la soupape (20, 20a) pour interrompre le trajet d'écoulement, **caractérisée en ce que** le trajet d'écoulement comporte deux alésages (32, 44) traversants co-axiaux séparés par un corps transversal (46) et des passages (48, 74) radiaux s'étendant depuis ces alésages, lesdits passages étant reliés par des alésages latéraux (50), et **en ce que** l'élément d'étanchéité (67, 68, 69) est associé à la jonction entre le premier alésage traversant (32) axial en direction de l'écoulement (x), et qui est entourée de cet élément et de l'accumulateur d'énergie (64), vers les alésages latéraux (50) hors du trajet d'écoulement (32, 44, 48, 50, 52, 74).

2. Soupape selon la revendication 1, **caractérisée en ce que** les alésages latéraux (50) présentent des axes sensiblement parallèles.

3. Soupape selon la revendication 1 ou 2, **caractérisée en ce que** l'accumulateur d'énergie (64), réalisé sensiblement sous la forme d'un ressort cylindrique, est disposé dans une rainure annulaire (56) d'une partie de boîtier (30) entourant le premier alésage traversant (32).

4. Soupape selon l'une des revendications 1 à 3, **caractérisée en ce que** l'élément d'étanchéité est une bague d'étanchéité (68), précontrainte des deux côtés, qui est déformable en section transversale par l'accumulateur d'énergie (64) et qui est en appui en étant susceptible d'être guidée à l'état déformé en section transversale, contre une arête annulaire (54) pour constituer un contre-élément sur le boîtier (26) de soupape.

5. Soupape selon la revendication 4, **caractérisée en ce que** la bague d'étanchéité (68) forme, à l'état déformé, sur l'accumulateur d'énergie associé (64), une arête ou un bourrelet constituant un organe d'étanchéité.

6. Soupape selon la revendication 4 ou 5, **caractérisée en ce que** la bague d'étanchéité (68) est associée à un manchon (66) en matériau flexible entourant au moins partiellement l'accumulateur d'énergie (64), et qui est susceptible d'être guidé par un tronçon (67) de forme annulaire situé dans le plan radial, contre la bague d'étanchéité.

7. Soupape selon la revendication 6, **caractérisée en ce que** le manchon (66) présente une section sensiblement en forme de L à partir du tronçon (67) de forme annulaire ainsi qu'une paroi annulaire (65) s'y raccordant et sensiblement parallèle à l'axe, ladite paroi annulaire étant associée à la paroi extérieure (58) de la rainure annulaire (56).

8. Soupape selon la revendication 6 ou 7, **caractérisée en ce que** la bague d'étanchéité (68) du tronçon (67) de forme annulaire du manchon (66) associé à l'accumulateur d'énergie (64) et est réalisé déformable à partir de celui-ci.

9. Soupape selon l'une des revendications 1 à 3, **caractérisée par** un élément d'étanchéité (69) comprenant deux bagues concentriques et un manchon (66) en matériau flexible entourant au moins partiellement l'accumulateur d'énergie (64), avec un tronçon (67) de forme annulaire et situé dans le plan radial, le manchon présentant une configuration susceptible d'être insérée entre les bagues et en ce que le tronçon de forme annulaire est monté en étant susceptible d'être guidé contre une arête annulaire (54) comme contre-élément dans le boîtier (26) de soupape.

10. Soupape selon la revendication 9, **caractérisée en ce que** l'arête annulaire (54) est prévue à la jonction entre les traversées (74) radiales de l'un des alésages traversants (32) et des alésages latéraux (50).

11. Soupape selon l'une des revendications 5 à 10, **caractérisée en ce que**, dans la paroi extérieure (58) de la rainure annulaire (56), ouverte vers l'arête annulaire (54) et recueillant l'accumulateur d'énergie (64) et le manchon (66), sont prévus des alésages radiaux (58) qui sont recouverts le cas échéant par la paroi annulaire (65) du manchon (66).

12. Soupape selon l'une des revendications 1 à 11, **caractérisée en ce que** l'accumulateur d'énergie (64), en cas d'apparition d'une pression inférieure à une valeur prédéterminée, est susceptible de se détendre par déplacement et/ou déformation de l'élément d'étanchéité (67, 68, 69).
